Europäisches Patentamt

European Patent Office

Office européen des brevets

(11) Publication number: **0 420 347 A1**

## EUROPEAN PATENT APPLICATION

(21) Application number: 90202538.6

(22) Date of filing: 25.09.90

(51) Int. Cl.5: **B60P 1/52**, E21F 13/00

(30) Priority: 29.09.89 IT 2189989

(43) Date of publication of application:
**03.04.91 Bulletin 91/14**

(84) Designated Contracting States:
**AT BE CH DE DK ES FR GB GR LI LU NL SE**

(71) Applicant: **CARBOSULCIS S.p.A.**

I-09010 Gonnesa, Cagliari(IT)

(72) Inventor: **Lange, Rolf P.**
**Su Faccheri**
**09045 Quartu S.E. - Cagliari(IT)**
Inventor: **Nassivera, Fabio**
**Via Mazzini 34**
**09014 Carloforte - Cagliari(IT)**

(74) Representative: **Roggero, Sergio et al**
**Ing. Barzanò & Zanardo Milano S.p.A. Via**
**Borgonuovo 10**
**I-20121 Milano(IT)**

(54) Device for transporting yard or stope materials, in particular for coal mines, constituted by a system of vehicles and of stationary platforms.

(57) Transport device for underground yards and stopes, in particular for coal mines, constituted by a system of tyre-wheeled, electrical-motor-propelled trolley-vehicles provided with a load-bearing deck (7) equipped with a motor-driven load-translating apparatus (8) based on ball or roller elements, and auxiliary platforms adjustable in height also equipped with a motor-driven system for translating the materials loaded on them.

Fig.1

EP 0 420 347 A1

# DEVICE FOR TRANSPORTING YARD OR STOPE MATERIALS, IN PARTICULAR FOR COAL MINES, CONSTITUTED BY A SYSTEM OF VEHICLES AND OF STATIONARY PLATFORMS

The present invention relates to a transport device for yards and stopes, suitable in particular for conveying yard or stope materials along long distances and in the presence of severe environmental limitations, such as in high-production-rate coal mines.

More particularly, the subject-matter of the present invention is an integrated transport system constituted by a tyre-wheeled, electrical-motor-propelled trolley-vehicle, and a transfer platform suitable for managing considerably large amounts of materials of discrete size, such as structural components, equipment pieces, spare parts and supplies.

The present invention is disclosed in the following by referring to a typical practical embodiment thereof as applied to a high-production-rate coal mine, for merely illustrative, non-limitative purposes, in that the same invention can be applied as well to any underground yards or stopes, in which environmental limitations exist, and wherein considerably large amounts of yard materials have to be handled, making it possible considerable improvements to be achieved as compared to the prior art.

In the exploitation of ore bodies like the underground coal deposits, one has to manage mining structures of considerably large size, and separate transport systems are used for mined ore -- for which continuous conveyors, such as conveyor belts, are used --for stope materials and for staff.

In case of a mine at a depth of the order of several hundred metres, its main structure is constituted by two mutually parallel galleries of road-like cross-section, one of which also performs the task of feeding fresh ventilation air, with the other one performing on the contrary the task of conveying exhausted air to the discharge shafts. Said mutually parallel galleries are connected to each other by transversal galleries closed by means of double-door bulkheads for the purpose of preventing the two air streams from getting short-circuited, i.e., said transversal galleries from acting as a bypass.

Such a main structure is connected with the land level by means of slants, also said "inclined shafts", in correspondence of storage and sorting/transfer yards, and in the subsoil is connected with the coal body exploitation galleries, with the transport shafts provided with lifting devices and with the air shafts.

The belt conveyors for transporting the mined ore are installed inside said main structure constituted by said two road size galleries.

The exploitation galleries ("drifts"), also arranged as pairs of galleries, run according to a substantially perpendicular direction relatively to the galleries which constitute the main structure and penetrate the ore body.

They are first bored up to their far end from the main structure, and the exploitation of the ore bed is carried out under backwards movement with milling machines and movable protecting tubbings progressivly shifted towards the main structure, leaving the ore body roof caved in behind them.

The ore mined by means of the milling machine is charged to conveyor belts running along one of above said mutually parallel drifts, and feeding the conveyor belts installed inside the galleries of the main structure, with the other drift being preferably destined to the transport of equipment, of yard/stope materials and of people.

In the same way as it occurs in case of the galleries of the main structure, also the two mutually parallel exploitation drifts are used, the one, for the feed of fresh air, and the other one, for the outflow of exhausted air.

The exploitation of the ore body requires the feed to the mining site of yard/stope materials such as tubbing elements, poles, struts, pipes, wooden materials, equipment for boring and finishing the exploitation galleries; such materials are then removed at a later time, and are partially used again.

The materials destined to the yards or stopes are transported, stored and packaged inside containers or large cases, stacked on pallets or assembled on transport frames.

According to the prior art, said yard/stope materials are generally transported by means of the lift devices installed inside the transport shafts and are sorted/transferred in the subsoil by means of the yard/stope service vehicles, generally powered by diesel engines, up to the mining site. The possible presence of dangerous gases has limited hitherto the use of electrical vehicles to few cases, and for short distances only.

In European patent No. 0 189 955, to the name of Metallgesellschaft at al., an underground electrical transport vehicle is disclosed which is destined to the transport of mined ore, according to an electrical propulsion concept analogous to the electrical propulsion concept of the instant invention. The adoption of such a transport vehicle in order to transport mined coal inside a mine coal would result questionable, owing to the presence of fine coal dust.

The use of combustion engines necessarily requires a very high rate of air replacement inside the mine, as well as the adoption of pollution-preventing and explosion-preventing devices, involving considerably high investments and operating costs.

Furthermore, the logistics of yard materials results to be affected by a poor productivity, owing to the need of sorting and transferring at the transport shafts the transported materials from/to the lifting devices to/from the yard/stope service vehicles, and makes it necessary intermediate storages and very rigid receiving and consignment procedures to be organized between said two types of carrier means.

The transport system according to the instant invention makes it possible such drawbacks to be overcome, and an efficacious and cheap logistics of yard/stope materials to be accomplished.

The transport device according to the present invention consists of a system costituted by a large-carrying capacity, tyre-wheeled, electrical-motor-propelled trolley-vehicle improved and made suitable for use in coal mines, coupled with stationary platforms for automated sorting/transfer, which connects the storage and sorting/transfer yards at surface level with the entrance of the exploitation galleries (drifts), running along the inclined shaft and the gallery of the main structure, which feeds fresh ventilation air.

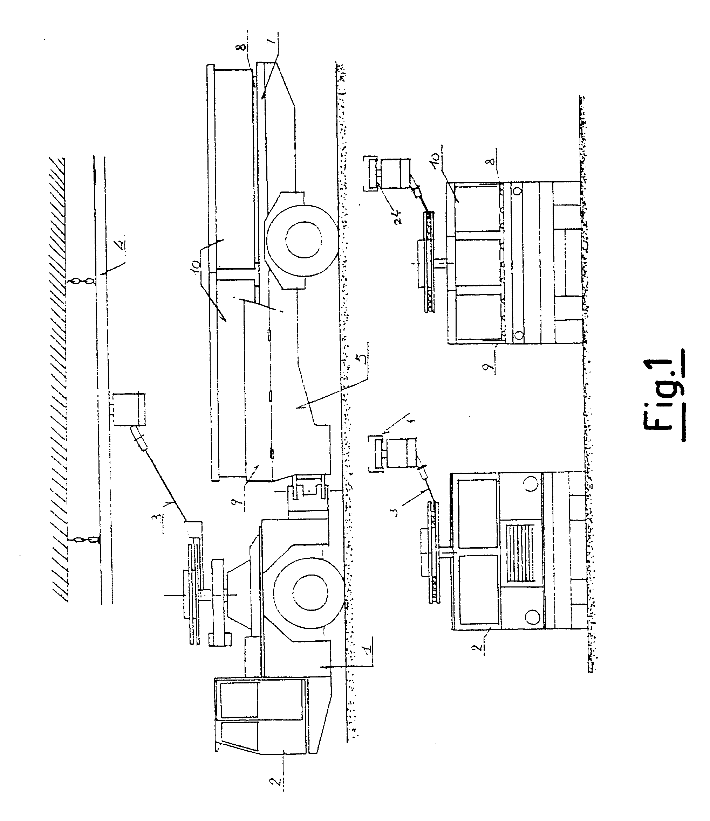

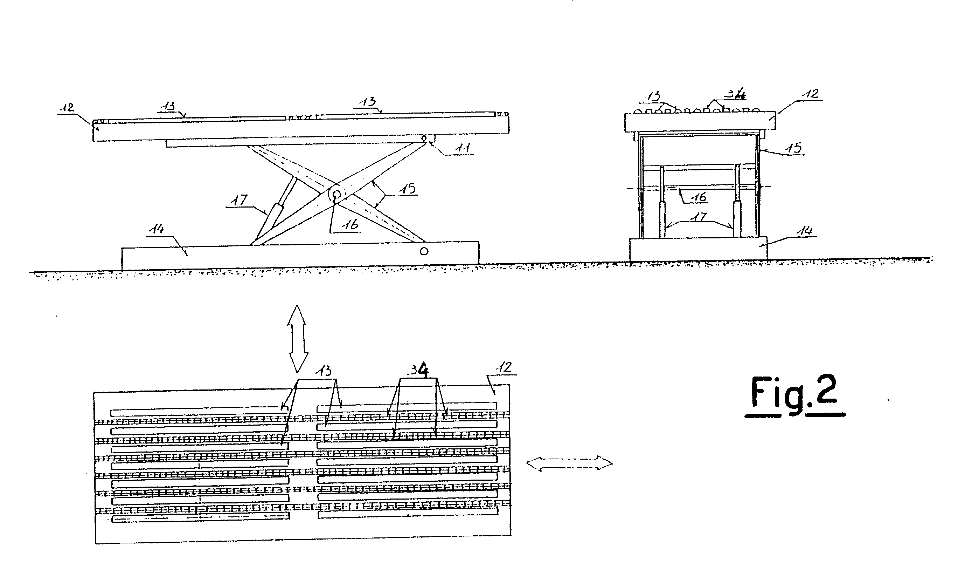

The transport device according to the present invention is disclosed herein by referring to a typical practical embodiment thereof, illustrated in Figure 1 and in Figure 2 for merely illustrative, non-limitative, purposes.

The vehicle according to the present invention consists of a front portion 1 on which the driver's cabin 2, the electrical motor and the trolley means 3 of connection with the overhead power line 4 are installed (these elements are disclosed in greater detail in the following), and of a rear portion 5 connected with the front position 1 by means of a coupling 6 of articulated-joint type.

Such a type of connection allows the vehicle to manoeuver within narrower rooms, and makes it possible the bending stresses to be prevented, which are applied to the structure of the vehicle owing to the unevennesses or differences in height existing on ground surface.

The rear portion 5 is provided with a deck 7 equipped with rollers 8 or balls, or other systems for motor-driven load shifting, in order to translate the materials loaded on it in the longitudinal direction, or in the transversal direction, or simultaneously in longitudinal and transversal directions. The deck is furthermore equipped with mobile sides 9 in order to keep the materials 10 loaded on the deck 7 blocked during vehicle traveling.

At the end points of the way along which the trolley-vehicle according to the present invention travels, i.e., on the storage and sorting/transfer yards provided at land level and at the intersections between the main galleries and the exploitation galleries, auxiliary platforms are installed -- one of which is depicted in Figure 2 in a typical form of practical embodiment thereof, shown for merely illustrative, non-limitative purposes.

The platform 11 is in fact constituted by a sorting/transfer deck 12 similar to the one installed on the vehicle, equippped with a motor-driven system for translating the materials loaded on on said deck 12, with load supporting elements of ball 13 or roller type.

Between the deck 12 and its relevant base bed 14, a system for deck height adjustment is interposed, such as, e.g., a system of rods 15 hinged at their centre by means of the shaft 16, which can be moved by means of one or more hydraulic cylinders 17 in order to adjust the height of the deck 12, so as to make it possible any differences in level relatively to the service vehicles to be compensated for, e.g., in order to enable the materials to be transferred from/to service vehicles having their deck at different levels, without any troubles.

The surface area of the deck 12 preferably corresponds to the surface area of the deck 7 of the trolley-vehicle according to the invention, or to a multiple of said deck 7 surface-area.

A particular feature of the decks according to a preferred form of practical embodiment of the invention is of being equipped with a system which makes it possible all, or a portion, of the materials loaded on them to be moved and transferred -- in either one of the longitudinal and transversal directions, or in both of them --, by means, e.g., of the adoption of separate drive systems for different groups of rollers or of balls.

The translation of the materials charged on the decks of the trolley-vehicles or of the stationary platforms in the one direction, or in the other direction, is carried out by varying the level of the concerned groups of rollers or balls, causing the materials loaded on the deck to be supported by one, or by another one, of said groups.

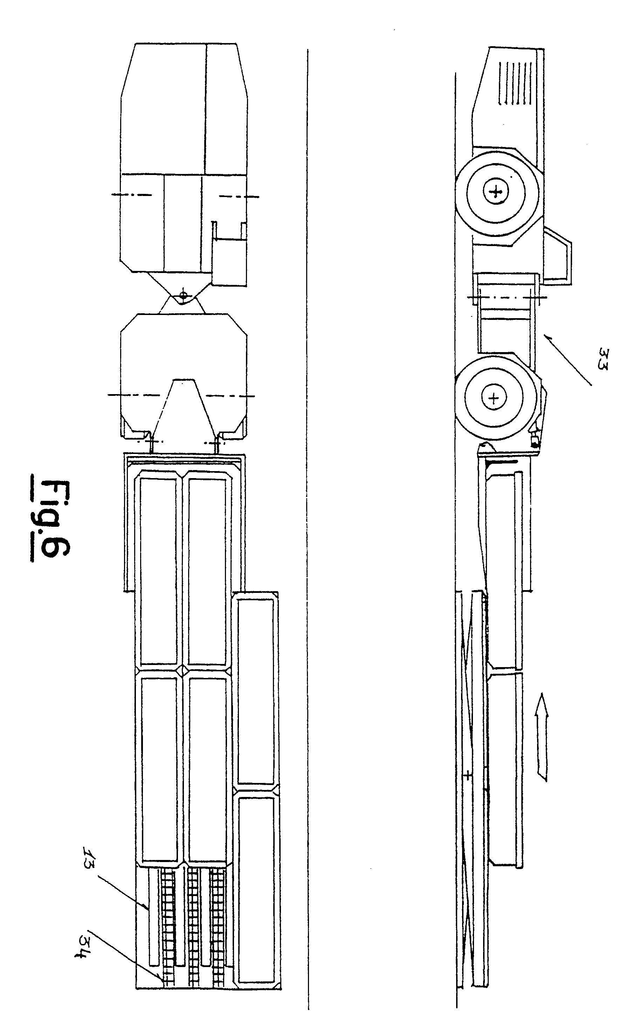

According to a preferred form of practical embodiment of the present invention, moving the materials loaded on the decks by means of the association (see Figures 2 and 6) of roller conveyors 13 and of chain conveyors 34 perpendicular to said roller conveyors --wherein both of said conveyor types can be lifted and lowered by means of hydraulic motors -- results to be very advantageous.

On the storage yard at land level, the platforms 11 receive, e.g., from lift trucks, the materials ready for delivery, and destined to the various areas of mine exploitation. For exemplifying purposes, such materials can be prepared packaged inside containers of standard size, on pallets, on transport frames and as strap-fastened stacks.

The trolley-vehicle takes the materials from the platform(s) at land level, transports said materials through an inclined shaft down to the underground site of transfer in the nearby of the drifts of access to the mining sites, and discharges said materials on one or more purposely provided platform(s) 11.

From the platforms 11 installed at the branching of the exploitation drifts, the materials are then collected, according to Figure 6, by the yard/stope service vehicles 33, which travel along the short length of the drift of access up to the mining site.

Such yard/stope service vehicles can be powered by means of internal-combustion engines and are provided with a deck on which the materials are directly charged from the sorting/transfer platforms 11.

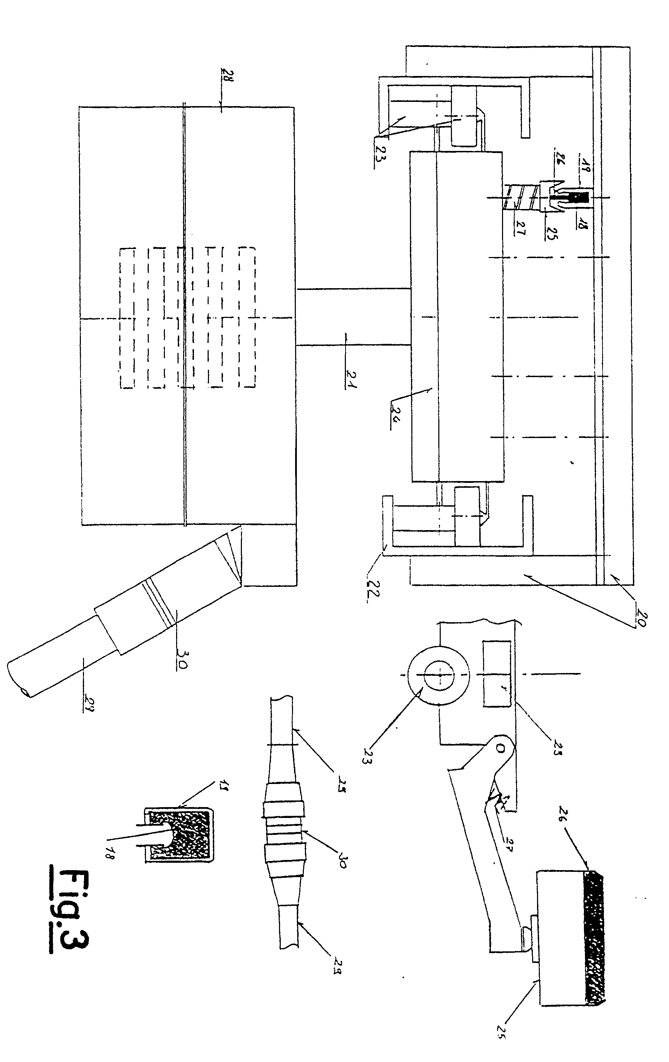

One of the essential components of the transport device according to the instant invention is constituted by its connection with the overhead electrical power line, which is illustrated by referring to Figure 3, which shows a typical form of practical embodiment thereof, shown for merely illustrative, non-limitative purposes.

The overhead electrical power line is constituted by a plurality of bar conductors 18 contained inside a sheath 19 and suspended inside a support 20. In Figure 3, reference is made to a powering system with three-phase AC, for which three phase conductors, one neutral conductor and one conductor for alarms and telecommunications are provided, with the total number of conductors being of five conductors. The sheath 19 protects the conductors from penetration of solid matter, from water dripping and from any fortuitous contacts, and has a downwards-directed slot opening acting as a guide for a thin rubbing-block contact.

From the rubbing-block contacts 19 electrical power is transmitted to the junction box through the link 21 without any bending stresses, in that said link can rotate around its axis.

Said closed channel performs tasks of protection of the electrical power line, as well as of longitudinal guide of the contact device with a layout both vertically and transversely consistent with the layout of the overhead electrical line.

According to the exemplifying form of practical embodiment depicted in Figure 3, inside the chamber defined by the side support flanges 20 two guides 22 are provided, constituted by an angle-shaped section bar, on which pairs of rubber-coated guide rollers 23 with mutually perpendicular axes run, which support and guide the rubbing-block contact carrier truck 24, keeping it always in a correct position relatively to the bar conductors 18 of the overhead electrical line.

The contact organ is constituted by an insulating support 25 and a thin rubbing-block contact 26 which enters the slot opening provided along the sheath 19 and comes into contact with the bar conductor 18.

The rubbing-block contact 26 is kept urged upwards by an elastic organ 27, with the continuous contact between the rubbing-block contact 26 and the bar conductor 18 being thus secured.

The above disclosed configuration of the contact unit for establishing the contact with the overhead electrical power line reduces to a considerable extent the sparking risks due to a non-perfect contact between the rubbing-block contact and the bar conductor, and in any case said sheath 19 prevents any spark starting from diffusing: such a feature makes said contact unit suitable for use in coal mines, inside main galleries used as windways for fresh air feed.

The whole of the rubbing-block contacts 26 are installed on the truck 24 which normally travels at the same speed as of the trolley-vehicle and continuously ensures the correct positioning of the rubbing-block contacts relatively to the overhead electrical line.

Inside the truck 24, the various rubbing-block contacts 26 are electrically connected by means of a releasable, multi-polar electrical connection constituted by two parts, installed in correspondence of the connection sleeve 21, with a connector installed in the connection box 28.

From the truck 24 a connection box 28 is suspended, which is free of rotating around the axis of the connection sleeve 21. Such a connection box 28 performs the task of connecting, by means of a plurality of slip rings, the cables coming from the rubbing-block contacts 26 with the cable 29 -- through a connector 30 -- and of feeding the vehicle with electrical power without transmitting bending stresses to the truck 24, when the trolley-vehicle is traveling.

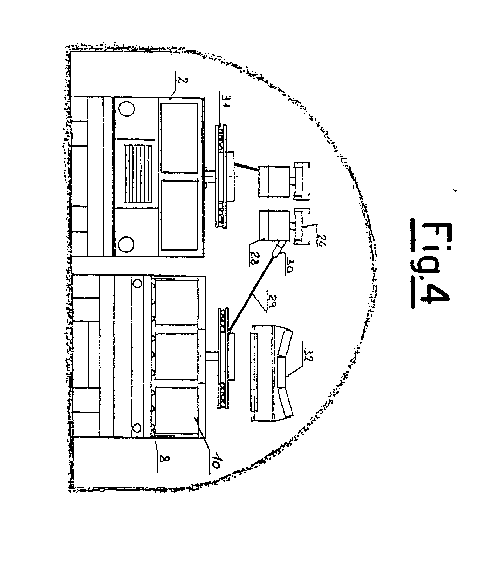

With reference to the general view of Figure 4, the cable 29 reaches the trolley-vehicle at the front portion 1 of this latter, getting wound around a vertical-axis cable-winding reel 31, which contains a cable length which is usually 30-50 metres long. When the vehicle works under normal operating conditions, the cable winding reel 31 is kept locked, so that the armoured cable 29 drags with itself the connection box 28 and the truck 24, when the trolley-vehicle is running.

The cable winding reel 31 is equipped with motor means which enable it to wind and unwind the cable 29 during the manoeuvers, both inside the mine and at the outdoor storage yard.

Therefore, the trolley-vehicle can be moved far away from the overhead power feed line, by a distance as long as the length of cable wound around the winding reel 31.

When the trolley-vehicle is turned into out of commission, it is disconnected from the overhead electrical power line by disconnecting the connector 30 from the connection box 28. The truck 24 and the connection box 28 remain positioned on the overhad electrical power line, and the connector 30 and the cable 29 remain connected with the vehicle.

In the top portion of the gallery, also the continuous transport means can be installed, which is constituted by the conveyor belt 32 for the mined mineral, without interfering with the underlying trolley-vehicle traffic. The same conveyor belts rise up the inclined shafts and reach the land level.

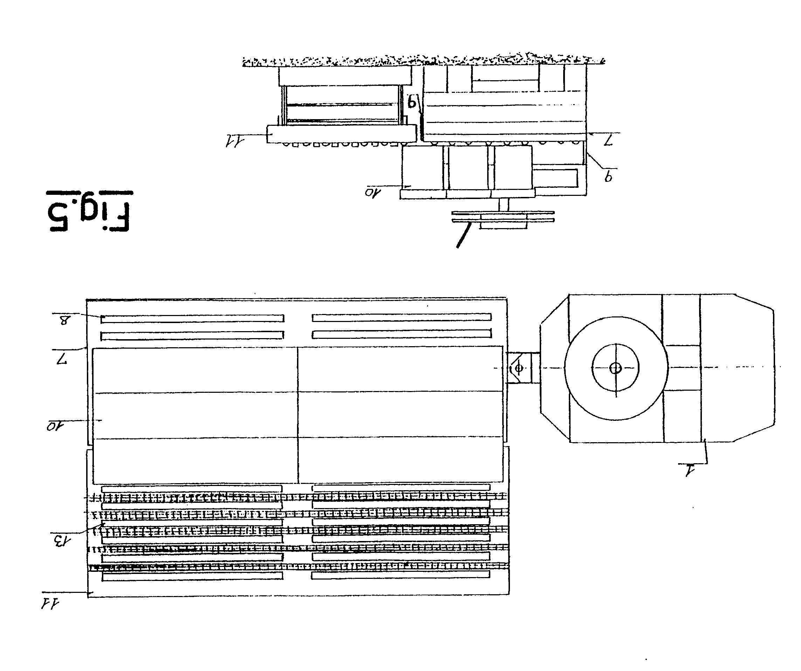

In Figure 5, the operation of discharge of the load borne by a trolley-vehicle onto a sorting/transfer platform is depicted.

The trolley-vehicle is approached to the platform 11 at the same level as of the deck 7, the deck side 9 is tilted down, and the translation rollers 8 and 13 are simultaneously actuated in order to translate the carried load leftwards.

The load, constituted by six large-size boxes, is transferred from the vehicle deck 7 onto the platform 11, without any actions from the outside, and from the platform 11 is transferred to the yard/stope service vehicles which are approached to said platform in the same way, either alongside it, or perpendicularly to it, in order to either consign or receive the materials.

The system for in-mine transport of materials, consisting of the trolley-vehicle and of the auxiliary platforms, makes it possible considerable advantages to be achieved as compared to the prior art, which is based on the transfer via lift shaft, and on a sorting/delivery by means of the yard/stope service vehicles; according to the present invention, the main transfer area is no longer one single transfer area in the nearby of the lift shaft, but is subdivided into a plurality of "local" areas, equipped with loading/unloading platforms fed with materials, or from which the materials are removed, by the trolley-vehicles. In that way, the organization at the transfer area is considerably simplified, the materials moving operations are speeded-up and the miscarriages are considerably reduced.

The replacement of a diesel-propelled truck by a trolley-vehicle makes it possible the costs to be considerably reduced, thanks to the lower power costs, and owing to the dramatic reduction in ventilation need (more than 20 cubic metres per second less, per each vehicle) and the reduced upkeep.

One should in fact bear in his mind that the main galleries, along which the trolley-vehicle traffic takes place, can reach and exceed 10 km of length, whilst the exploitation drifts, which branch off said main galleries and inside which the traffic takes place by means of diesel-propelled trucks, are never longer than 1 000 metres.

The long-distance traffic is hence entrusted to a few trolley-vehicles endowed with a large load carrying capacity, with the small-size diesel-propelled trucks only performing tasks of "local" traffic.

A considerable increase in safety is furthermore achieved owing to the absence of suspended loads during the sorting/transfer operations, which, on the contrary, are present in the traditional systems (bridge cranes, monorails...), and thanks to the absence of staff in the nearby of the sorted/transferred loads.

Furthermore, also better environmental and working conditions are obtained, thanks to the decrease in number of sorting/transfer areas, to the lower development of fumes and heat, and to the much lower noise level generated by the trolley-vehicles.

Furthermore, if the energy-recovery electrical braking is adopted, the use can be avoided of the mechanical brakes, and a further amount of power can be recovered.

The overall transport system based on the large-carrying capacity trolley-vehicle and on sorting/transfer platforms enables furthermore a large amount of labour to be saved, owing to the following factors.

The number of transport vehicles used for transporting the materials is considerably reduced, because most distance is covered aboard faster and larger-carrying capacity transport means; the handling of materials with the roller platforms required much less time and a smaller number of workers, who are hence prevailingly used in the operations of preparation of the loads at the land-level yard; the transfers via lift shaft are practically eliminated as regards the materials; the need for transport means servicing and maintenance is considerably reduced.

It should be moreover stressed that the use of a vehicle provided with a deck analogous to the deck of the normal trucks for road freighting purposes makes it possible packages of standard type to be used, with a burdensome handling of the materials at the storage yards being thus avoided.

In order to render more explicit the advantages which can be achieved by means of the instant invention, in the following example a typical application of said invention in a coal mine is disclosed for exemplifying, non-limitative purposes.

Example

Data about the mine and its structure:
Inclined shaft
- Length : 3 300 m
- Slope : 14%

5

- Surface-area of the cross-section : 28 m²
- Number of stretches : 3
- Average radius of bends : 7.5 m

Structural galleries:
- Length : 6 000 m
- Maximum slope : 5%
- Surface-area of the cross-section : 28 m²
- Headroom : 5 m

Data of the vehicle/platform system

Characteristics of the vehicle:
- Overall length : 11.5 m
- Overall width : 2.6 m
- Overall height : 2.5 m
- Deck height : 1.3 m max
- Deck length : 6.75 m
- Deck width : 2.5 m
- Height of the driver's cabin : 2.2 m
- Maximum steering radius : 9.5 m
- Weight under no-load conditions : 23 000 kg
- Squirrel-cage, asynchronous, three-phase electrical motor, 1 500 rpm, 600 V, 50 Hz, 200 kW

Vehicle performance:
- Maximum slope superable under no-load conditions : 57%
- Ditto, under full-load conditions : 43%
- Speed under no-load conditions on level roads : 42 km/hour
on 5% climbs : 31 km/hour
on 14% climbs : 14 km/hour
- Speed under full-load conditions on level roads : 38 km/hour
on 5% climbs : 15 km/hour
on 14% climbs : 6 km/hour
- Useful carrying capacity : 20 000 kg

Platform:
- Useful length : 6 600 mm
- Useful width : 2 400 mm
- Maximum height (on top of rollers): 1 500 mm
- Minimum height (on top of rollers): 800 mm
- Roller diameters : 152/159 mm
- Number of longitudinal sectors : 3
- Number of transversal sectors : 2
- Average lifting speed : 0.02 m/second
- Load translation speed : 0.05 m/second
- Hydraulic translation motors:
for chains for longitudinal movements : 3 motors of 1.5 kW
for rollers for transversal movements : 3 motors of 1.5 kW
- Motor of the hydraulic central control unit : 15 kW

**Claims**

1. Transport device for transporting yard/stope materials and in particular for coal mines, characterized in that it is constituted by an electrical-motor propelled, tyre-wheeled, articulated trolley-vehicle provided with a deck equipped with a motor-driven load-moving system of roller and/or ball and/or chain type, for translating the materials loaded on it, and by auxiliary receiving and delivering platforms for receiving/delivering the yard/stope materials, also equipped with a motor-driven materials moving system for translating the materials laying on them.

2. Transport device for transporting yard/stope materials, and in particular for coal mines according to claim 1, characterized in that the electrical-motor-propelled trolley-vehicle is fed with electrical power by means of an overhead electrical power line constituted by bar conductors installed inside a protection channel inside which a contact-bearing truck (24) runs under continuous and protected contact with said bar conductors, and connected with the electrical-motor-propelled trolley-vehicle by means of a cable which can be wound and unwound around a cable-winding reel installed on said electrical-motor-propelled trolley-vehicle; with said reel being kept locked during the normal traveling of the trolley-vehicle, so that the contact-carrier truck travels at the same speed as of the electrical-motor-propelled trolley-vehicle, owing to a dragging action by the cable, whilst during the manoeuvers the cable-winding reel can be caused to revolve, thus enabling the electrical-motor-propelled trolley-vehicle to be moved far away from the overhead electrical power line.

3. Transport device for underground yards/stopes and in particular for mines according to claim 2, characterized in that the bar conductors are each contained inside an open sheath with a slot opening directed downwards, inside which the rubbing-block contacts installed on the rubbing-block contact carrier truck penetrate and are constantly kept urged against the conductors by elastic elements (25).

4. Transport device for underground yards/stopes and in particular for mines according to claim 2, characterized in that the rubbing-block contact carrier truck carries a bottom box (28) from which the connector (30) for the electrical cable (29) -- which elecrical cable (29) is connected with the trolley-vehicle --extends, which connector (30) makes it possible the rubbing-block contact carrier truck (24) and said box (28) to be disconnected from the electrical-motor-propelled trolley vehicle when this latter is turned into out of commission.

5. Transport device for underground yards/stopes and in particular for mines according to claim 1, characterized in that said auxiliary platform is adjustable in height, so that it can be adapted to the level of the deck of different transport means, so that the mutual transfer of materials takes place at a same level.

6. Transport device for underground yards/stopes and in particular for mines according to one or more of the preceding claims, characterized in that the materials loaded on the deck of the trolley-vehicles, and/or on the deck of the platforms are translated by means of a separate motor-drive means for different groups of rollers, balls or chains, with the movement of a portion of the load only, or of the whole load, being thus obtained.

7. Transport device for underground yards/stopes and in particular for mines according to one or more of the preceding claims 1, 5 and 6, characterized in that the materials loaded on the decks are translated by means of a mixed system of rollers and chains, and preferably with the rollers being used for the transversal movement and the chains being used for the longitudinal movement of said materials, with said rollers and said chains being alternatively lifted, so as to support the load to be translated in the relevant direction.

## Fig.1

EP 0 420 347 A1

Fig.2

Fig.3

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 189 955 (METALLGESELLSCHAFT)<br>* Claims; figure * | 1,2 | B 60 P 1/52<br>E 21 F 13/00 |
| A | DE-B-1 127 848 (SCHARF)<br>* Column 1, line 47 - column 2, line 37; figure * | 1 | |
| A | GB-A-2 124 569 (COAL INDUSTRY)<br>* Abstract; figures * | 3,4 | |
| A | EP-A-0 268 323 (HEERING)<br>* Abstract; figures * | 1,6 | |
| A | GB-A-2 059 912 (FMC)<br>* Abstract; figures 1-4 * | 1,5,6 | |
| A | DE-A-3 700 568 (LEMLER)<br>* Claims; figure 1 * | 1,6 | |

TECHNICAL FIELDS
SEARCHED (Int. Cl.5)

B 60 P
E 21 F

The present search report has been drawn up for all claims

| Place of search | Date of completion of search | Examiner |
|---|---|---|
| The Hague | 05 December 90 | RAMPELMANN J. |